# EUROPÄISCHE PATENTSCHRIFT

(11) **EP 4 150 260 B1**
(45) Veröffentlichungstag und Bekanntmachung des Hinweises auf die Patenterteilung: **12.02.2025**
(21) Anmeldenummer: 21726566.9
(22) Anmeldetag: 05.05.2021
(51) Int. Cl.: A47B 96/20, F24C 15/08

(54) **BEFESTIGUNGSVORRICHTUNG, MONTAGEANORDNUNG UND HAUSHALTSGERÄT**
FASTENING DEVICE, ASSEMBLY ARRANGEMENT AND DOMESTIC APPLIANCE
DISPOSITIF DE FIXATION, AGENCEMENT D'ASSEMBLAGE ET APPAREIL MÉNAGER

(30) Priorität: 12.05.2020 DE 102020205969
(43) Veröffentlichungstag der Anmeldung: 22.03.2023
(73) Patentinhaber: BSH Hausgeräte GmbH, 81739 München (DE)
(72) Erfinder: APOSTOLIDIS, Christopher-Karl, 76137 Karlsruhe (DE)
(86) Internationale Anmeldenummer: PCT/EP2021/061841
(87) Internationale Veröffentlichungsnummer: WO 2021/228651

(56) Entgegenhaltungen:
- EP-A2- 2 786 675
- DE-U1- 202009 016 669
- DE-U1- 202015 008 847
- DE-U1- 8 018 796
- IT-A1- PN 970 049
- US-A1- 2004 240 950

## Beschreibung

Die vorliegende Erfindung betrifft eine Befestigungsvorrichtung zum Befestigen einer Sichtblende an einer Montageleiste eines Haushaltsgeräts, eine Montageanordnung für ein Haushaltsgerät mit einer derartigen Befestigungsvorrichtung und ein Haushaltsgerät mit einer derartigen Befestigungsvorrichtung und/oder mit einer derartigen Montageanordnung.

Bei in Möbeln montierten Haushaltsgeräten, wie beispielsweise bei einem Einbaubackofen, werden oftmals Sichtblenden eingesetzt, um einen Zwischenraum zwischen dem Möbel und dem Haushaltsgerät zu verdecken. Zwischen dem Haushaltsgerät und der Sichtblende sowie zwischen der Sichtblende und dem Möbel sind in diesem Fall Spalte vorgesehen, die aus optischen Gründen eine möglichst gleichmäßige Spaltbreite aufweisen sollen. Hierzu ist es erforderlich, eine Position der Sichtblende verstellen zu können.

Die DE 20 2009 016 669 U1 beschreibt eine Vorrichtung zur Verbindung eines Frontbauteils eines Möbelteils mit einem zum Frontbauteil benachbarten Abschnitt des Möbelteils, wobei das Möbelteil an einem Möbelkorpus aufgenommen sein kann und wobei Anbringmittel zur Verbindung des Frontbauteils und des benachbarten Abschnitts vorgesehen sind, wobei die Anbringmittel ein an dem benachbarten Abschnitt des Möbelteils anbringbares Spannelement umfassen, das ausgebildet ist, mit einem Halteabschnitt am Frontbauteil derart zusammenzuwirken, dass durch Überführung des am benachbarten Abschnitt des Möbelteils angebrachten Spannelements in eine gespannte Stellung das Frontbauteil und der benachbarte Abschnitt des Möbelteils miteinander verbindbar sind.

Die DE 80 18 796 U1 zeigt einen verstellbaren, mit einem Exzenter ausgerüsteter Bodenträger, der an einer Stirnfläche einen Aufnahmeschlitz für ein Verstellwerkzeug aufweist, wobei der Exzenter drehbar in einem mit der Auflagefläche für einen Fachboden ausgestatteten Gehäuse gelagert ist und mit dem Gehäuse ein in den Aufnahmeschlitz des Exzenters sich erstreckender Arretiernocken einstückig ist.

Die DE 20 2015 008 847 U1 beschreibt eine Befestigungsvorrichtung mit einem Dübel und einem am Dübel fixierten Verbindungselement zum Befestigen eines ersten Möbelteils an einem zweiten Möbelteil, wobei der Dübel in einem Sackloch oder in einer Durchgangsöffnung des einen Möbelteils lagerbar und mittels des Verbindungselements fixierbar ist, wobei der Dübel hülsen- oder topfartig ausgebildet ist und gegebenenfalls einen Topfboden und eine einen Aufnahmeraum umgebende Wand aufweist, die von wenigstens zwei Wandabschnitten gebildet wird, welche vom Verbindungselement radial nach außen aufspreizbar sind.

Die EP 2 786 675 A2 zeigt eine Positioniervorrichtung für ein bewegbares Möbelteil, das mit einer Führungseinrichtung an einem Möbelkorpus eines Möbels bewegbar geführt ist, die zur Positionierung des Möbelteils an einem rückseitigen Abschnitt der Führungseinrichtung vorgesehen ist, mit einem Anbringmittel zur Anbringung der Positioniervorrichtung an einem rückseitigen Bereich des bewegbaren Möbelteils, wobei die Positioniervorrichtung ein Montageelement umfasst, mit dem die Positioniervorrichtung an einer ersten Montageposition an der Führungseinrichtung derart lösbar anbringbar ist, dass im Zuge einer Montage des Möbelteils zumindest ein Teil der Anbringmittel vor Erreichen einer vorgegebenen Kraft mit dem Möbelteil verbindbar sind, wobei ein Lösen des Montageelements von der ersten Montageposition vorgesehen ist, wenn das Möbelteil im Zuge der Montage an der Führungseinrichtung mit mindestens der vorgegebenen Kraft in eine vorgegebene Richtung weiterbewegt wird.

Die IT PN 970 049 A1 beschreibt ein Haushaltsgerät.

Vor diesem Hintergrund besteht eine Aufgabe der vorliegenden Erfindung darin, eine verbesserte Befestigungsvorrichtung zur Verfügung zu stellen.

Demgemäß wird eine Befestigungsvorrichtung zum Befestigen einer Sichtblende an einer Montageleiste eines Haushaltsgeräts vorgeschlagen. Die Befestigungsvorrichtung umfasst einen Basiskörper, einen Exzenterkörper, welcher in einem Aufnahmeabschnitt des Basiskörpers aufnehmbar ist, und einen Scharnierabschnitt, welcher den Exzenterkörper mit dem Basiskörper verbindet, wobei der Exzenterkörper mit Hilfe des Scharnierabschnitts von einem Ausgangszustand, in welchem der Exzenterkörper außerhalb des Aufnahmeabschnitts angeordnet ist, in einen Endzustand, in welchem der Exzenterkörper in dem Aufnahmeabschnitt aufgenommen ist, klappbar ist.

Dadurch, dass der Exzenterkörper mit Hilfe des Scharnierabschnitts mit dem Basiskörper verbunden ist, sind der Exzenterkörper und der Basiskörper unverlierbar miteinander verbunden. Dies erleichtert die Herstellung der Befestigungsvorrichtung. Beispielsweise kann die Befestigungsvorrichtung so kostengünstig als Kunststoffspritzgussbauteil gefertigt werden.

Die Sichtblende kann auch als Dekorblende, Designblende, Designlisene, Sichtlisene oder Dekorlisene bezeichnet werden. Die Montageleiste kann auch als technische Lisene bezeichnet werden. Die Montageleiste kann mit dem Haushaltsgerät verbunden, beispielsweise mit diesem verschraubt, sein. Mit Hilfe der Montageleiste kann das Haushaltsgerät in einem Möbel montiert werden. Vorzugsweise sind dem Haushaltsgerät zwei derartige Montageleisten zugeordnet, die beidseits des Haushaltsgeräts an Seitenwänden desselben angeordnet sind. Das Haushaltsgerät kann beispielsweise ein Backofen, ein Mikrowellen-Kombinationsbackofen, ein Mikrowellengerät, eine Waschmaschine, eine Geschirrspülmaschine, ein Wäschetrockner, ein Kühlschrank, ein Kaffee-Vollautomat, eine Wärmeschublade oder dergleichen sein.

Der Aufnahmeabschnitt ist vorzugsweise als den Basiskörper durchbrechende Bohrung ausgeführt. Das heißt, der Aufnahmeabschnitt ist vorzugsweise kreisförmig. Dementsprechend ist auch der Exzenterkörper zumindest abschnittsweise zylinderförmig aufgebaut, so dass dieser zumindest teilweise in dem Aufnahmeabschnitt aufgenommen werden kann. Der Scharnierabschnitt ist vorzugsweise als Filmscharnier ausgebildet. Unter einem "Filmscharnier" ist vorliegend eine Querschnittsverengung zwischen dem Basiskörper und dem Exzenterkörper zu verstehen, welche so dünnwandig ist, dass der Exzenterkörper gegenüber dem Basiskörper verschwenkt werden kann. Vorzugsweise wird der Exzenterkörper zum Verbringen von dem Ausgangszustand in den Endzustand in den Aufnahmeabschnitt eingepresst. Hierbei kann der Exzenterkörper in dem Aufnahmeabschnitt verrasten. Der Exzenterkörper ist in dem Aufnahmeabschnitt drehbar gelagert.

Gemäß einer Ausführungsform befindet sich der Exzenterkörper in dem Endzustand in einer Nullposition, wobei der Exzenterkörper aus der Nullposition heraus in eine beliebige Winkelposition drehbar ist, und wobei der Scharnierabschnitt bei einem Herausdrehen des Exzenterkörpers aus der Nullposition abschert.

Mit Hilfe des Scharnierabschnitts kann somit gewährleistet werden, dass der Exzenterkörper bei dem Klappen desselben von dem Ausgangszustand in den Endzustand immer in der Nullposition in dem Aufnahmeabschnitt des Basiskörpers positioniert wird. Ein Verdrehen des Exzenterkörpers, um diesen in die Nullposition zu verbringen, ist daher nicht erforderlich. Dies erleichtert die Handhabung der Befestigungsvorrichtung.

Gemäß einer weiteren Ausführungsform weist der Basiskörper einen Einhängeabschnitt zum Einhängen der Befestigungsvorrichtung in einen an der Montageleiste vorgesehenen Montagedurchbruch auf.

Der Einhängeabschnitt ist vorzugsweise hakenförmig. Der Einhängeabschnitt erstreckt sich aus dem Basiskörper heraus und ist einteilig, insbesondere materialeinstückig, mit dem Basiskörper verbunden. "Einteilig" oder "einstückig" bedeutet vorliegend, dass der Basiskörper und der Einhängeabschnitt ein gemeinsames Bauteil bilden und nicht aus mehreren Bauteilen zusammengesetzt sind. "Materialeinstückig" bedeutet vorliegend, dass der Basiskörper und der Einhängeabschnitt durchgehend aus demselben Material gefertigt sind.

Gemäß einer weiteren Ausführungsform weist der Basiskörper einen Rastabschnitt zum Einrasten der Befestigungsvorrichtung in den Montagedurchbruch auf.

Der Rastabschnitt ist elastisch, insbesondere federelastisch, verformbar. Zum Befestigen der Befestigungsvorrichtung an dem Montagedurchbruch wird zunächst der Einhängeabschnitt in den Montagedurchbruch eingeführt oder eingehängt. Anschließend wird der Rastabschnitt in den Montagedurchbruch eingedrückt, wobei dieser sich federelastisch verformt und in den Montagedurchbruch einrastet oder einschnappt.

Gemäß einer weiteren Ausführungsform ist die Befestigungsvorrichtung ein einteiliges, insbesondere ein materialeinstückiges, Kunststoffbauteil.

Vorzugsweise ist die Befestigungsvorrichtung ein Kunststoffspitzgussbauteil. Beispielsweise kann die Befestigungsvorrichtung aus Polyethylen (PE), Acryl-Butadien-Styrol (ABS), Polypropylen (PP) oder aus einem anderen geeigneten Kunststoffmaterial gefertigt sein. Alternativ kann die Befestigungsvorrichtung auch aus Metall gefertigt sein.

Gemäß einer weiteren Ausführungsform weist der Basiskörper federelastisch verformbare Schnapparme auf, die dazu eingerichtet sind, formschlüssig in die Sichtblende einzuschnappen.

Eine formschlüssige Verbindung entsteht durch das Ineinander- oder Hintergreifen von mindestens zwei Verbindungspartnern, vorliegend den Schnapparmen und der Sichtblende. Zum Verbinden der Sichtblende mit der Befestigungsvorrichtung wird diese auf die Befestigungsvorrichtung aufgedrückt, wodurch sich die Schnapparme federelastisch verformen und in die Sichtblende einrasten.

Gemäß einer weiteren Ausführungsform sind die Schnapparme mit Hilfe eines federelastisch verformbaren Federabschnitts miteinander verbunden.

Der Federabschnitt ist vorzugsweise bogenförmig gekrümmt. Der Basiskörper, die Schnapparme und der Federabschnitt sind einteilig, insbesondere materialeinstückig, ausgebildet.

Gemäß einer weiteren Ausführungsform weist der Basiskörper einen Höhenpositionsabschnitt zum Positionieren der Befestigungsvorrichtung an der Sichtblende auf, wobei der Höhenpositionsabschnitt dazu eingerichtet ist, formschlüssig in an der Sichtblende vorgesehene Ausnehmungen einzugreifen.

Insbesondere sind die Ausnehmungen rückseitig an der Sichtblende vorgesehen. Der Höhenpositionsabschnitt ist leistenförmig und ragt seitlich beidseits über den Basiskörper hinaus. Durch den formschlüssigen Eingriff des Höhenpositionsabschnitts in die Ausnehmung der Sichtblende wird eine genaue vertikale Positionierung der Sichtblende an der Befestigungsvorrichtung ermöglicht.

Gemäß einer weiteren Ausführungsform weist der Exzenterkörper einen Eingriffsabschnitt auf, der dazu eingerichtet ist, formschlüssig in den Aufnahmeabschnitt einzugreifen.

Der Eingriffsabschnitt weist vorzugsweise eine zylinderförmige Geometrie auf. Der Eingriffsabschnitt ist drehbar in dem Aufnahmeabschnitt gelagert. Insbesondere kann der Eingriffsabschnitt in den Aufnahmeabschnitt einrasten.

Gemäß einer weiteren Ausführungsform weist der Eingriffsabschnitt eine Werkzeugausnehmung auf, in welcher ein Werkzeug zum Drehen des Exzenterkörpers aufnehmbar ist.

Der Eingriffsabschnitt kann geeignet sein, eine Klinge eines Schlitzschraubendrehers oder eines Kreuzschlitzschraubendrehers aufzunehmen. Hierdurch ist eine einfache Verdrehung des Exzenterkörpers gegenüber dem Basiskörper möglich.

Gemäß einer weiteren Ausführungsform weist der Exzenterkörper einen zylinderförmigen Exzenterabschnitt auf, welcher außermittig mit dem Eingriffsabschnitt verbunden ist.

"Außermittig" bedeutet vorliegend, dass der Exzenterabschnitt und der Eingriffsabschnitt keine gemeinsame Mittel- oder Symmetrieachse aufweisen. Das heißt insbesondere, dass Symmetrieachsen des Exzenterabschnitts und des Eingriffsabschnitts voneinander beabstandet oder zueinander versetzt angeordnet sind. Zwischen dem Exzenterabschnitt und dem Eingriffsabschnitt kann ein scheibenförmiger Zwischenabschnitt vorgesehen sein, der den Eingriffsabschnitt einteilig, insbesondere materialeinstückig, mit dem Exzenterabschnitt verbindet. Für den Zwischenabschnitt kann an dem Basiskörper ein taschenförmiger Aufnahmeabschnitt vorgesehen sein, in dem der Zwischenabschnitt drehbar gelagert ist. Der Zwischenabschnitt weist vorzugsweise einen größeren Durchmesser auf als der Eingriffsabschnitt und als der Exzenterabschnitt.

Gemäß einer weiteren Ausführungsform weist der Exzenterabschnitt eine Werkzeugausnehmung auf, in welcher ein Werkzeug zum Drehen des Exzenterkörpers aufnehmbar ist.

Die Werkzeugausnehmung kann geeignet sein, eine Klinge eines Schlitzschraubendrehers oder Kreuzschlitzschraubendrehers aufzunehmen. Dabei weisen die Werkzeugausnehmung des Eingriffsabschnitts und die Werkzeugausnehmung des Exzenterabschnitts vorzugsweise zwei sich voneinander unterscheidende Geometrien auf. Das heißt beispielsweise, dass die Werkzeugausnehmung des Eingriffsabschnitts zur Aufnahme einer Klinge eines Schlitzschraubenziehers geeignet ist und der Eingriffsabschnitt des Exzenterabschnitts zur Aufnahme einer Klinge eines Kreuzschlitzschraubenziehers geeignet ist. Dadurch, dass zwei Werkzeugausnehmungen vorgesehen sind, ist es möglich, den Exzenterkörper von zwei Seiten der Befestigungsvorrichtung aus zu betätigen.

Ferner wird eine Montageanordnung für ein Haushaltsgerät vorgeschlagen. Die Montageanordnung umfasst eine Montageleiste und eine wie zuvor erläuterte Befestigungsvorrichtung, wobei die Befestigungsvorrichtung in den Endzustand verbracht ist, wobei die Befestigungsvorrichtung an der Montageleiste befestigt ist, und wobei sich die Befestigungsvorrichtung bei einem Verdrehen des Exzenterkörpers relativ zu dem Basiskörper linear gegenüber der Montageleiste bewegt.

Hierbei ist der Exzenterabschnitt des Exzenterkörpers in dem Montagedurchbruch der Montageleiste aufgenommen und liegt gegen Seitenkonturen desselben an. Bei einem Verdrehen des Exzenterkörpers relativ zu dem Basiskörper verschiebt der Exzenterkörper die Befestigungsvorrichtung in einer horizontalen Richtung oder Breitenrichtung linear gegenüber der Montageleiste. Hierdurch ist die Einstellung eines Spalts zwischen der Sichtblende und dem Möbel beziehungsweise zwischen der Sichtblende und einer Tür und/oder einer Bedienblende des Haushaltsgeräts einfach möglich. Vorzugsweise sind dem Haushaltsgerät zwei derartige Montageanordnungen zugeordnet, die beidseits des Haushaltsgeräts angeordnet sind. Die Montageanordnungen können mit dem Haushaltsgerät verschraubt sein.

Gemäß einer Ausführungsform umfasst die Montageanordnung eine Sichtblende, welche mit Hilfe der Befestigungsvorrichtung mit der Montageleiste verbunden ist.

Vorzugsweise sind der Sichtblende zwei Befestigungsvorrichtungen zugeordnet, die entlang einer Hochrichtung betrachtet übereinander angeordnet sind. Dadurch, dass zwei Befestigungsvorrichtungen vorgesehen sind, wird die Einstellbarkeit der Sichtblende verbessert. Die Sichtblende kann nach dem Einstellen der Befestigungsvorrichtung oder der Befestigungsvorrichtungen auf diese aufgeclipst werden. Dabei verformen sich die federelastischen Schnapparme der Befestigungsvorrichtung und rasten in die Sichtblende ein. Alternativ kann die Sichtblende auch vor dem Einstellen der Befestigungsvorrichtung auf diese aufgeschnappt werden. In diesem Fall ist eine Verstellung der Befestigungsvorrichtung von einer Rückseite der Montageleiste aus möglich.

Weiterhin wird ein Haushaltsgerät mit einer derartigen Befestigungsvorrichtung und/oder einer derartigen Montageanordnung vorgeschlagen.

Wie zuvor erwähnt, kann das Haushaltsgerät ein beliebiges Haushaltsgerät, wie beispielsweise ein Herd, ein Backofen, ein Mikrowellen-Kombinationsbackofen, ein Mikrowellengerät, ein Kühlschrank, eine Waschmaschine, ein Wäschetrockner, eine Geschirrspülmaschine oder dergleichen, sein. Vorzugsweise weist das Haushaltsgerät, wie zuvor erwähnt, zwei derartige Montageanordnungen und vier Befestigungsvorrichtungen auf.

Weitere vorteilhafte Ausgestaltungen und Aspekte der Befestigungsvorrichtung, der Montageanordnung und/oder des Haushaltsgeräts sind Gegenstand der Unteransprüche sowie der im Folgenden beschriebenen Ausführungsbeispiele der Befestigungsvorrichtung, der Montageanordnung und/oder des Haushaltsgeräts. Im Weiteren werden die Befestigungsvorrichtung, die Montageanordnung und/oder das Haushaltsgerät anhand von bevorzugten Ausführungsformen unter Bezugnahme auf die beigelegten Figuren näher erläutert.
- Fig. 1: zeigt eine schematische perspektivische Ansicht einer Ausführungsform eines Haushaltsgeräts;
- Fig. 2: zeigt eine schematische Vorderansicht des Haushaltsgeräts gemäß Fig. 1;
- Fig. 3: zeigt eine schematische perspektivische Explosionsansicht einer Ausführungsform einer Montageanordnung für das Haushaltsgerät gemäß Fig. 1;
- Fig. 4: zeigt eine schematische perspektivische Ansicht einer Ausführungsform einer Befestigungsvorrichtung für die Montageanordnung gemäß Fig. 3;
- Fig. 5: zeigt eine weitere schematische perspektivische Ansicht der Befestigungsvorrichtung gemäß Fig. 4;
- Fig. 6: zeigt eine schematische Vorderansicht der Befestigungsvorrichtung gemäß Fig. 4;
- Fig. 7: zeigt eine schematische Rückansicht der Befestigungsvorrichtung gemäß Fig. 4;
- Fig. 8: zeigt eine schematische Detailansicht der Montageanordnung gemäß Fig. 3;

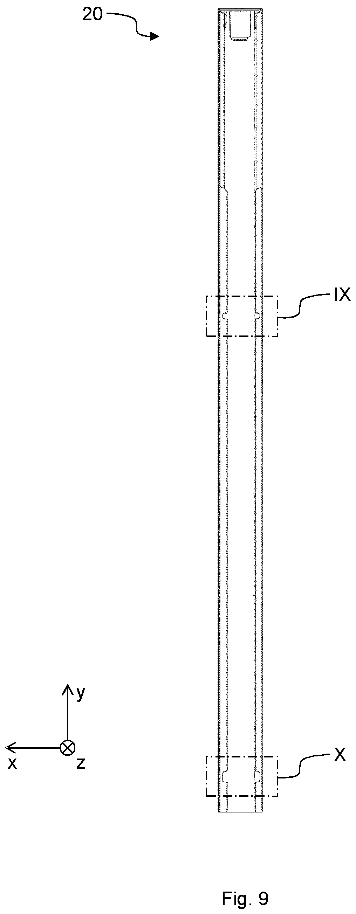

- Fig. 9: zeigt eine schematische Rückansicht einer Ausführungsform einer Sichtblende für die Montageanordnung gemäß Fig. 3;
- Fig.: 10 zeigt die Detailansicht X gemäß Fig. 9; und
- Fig. 11: zeigt die Detailansicht XI gemäß Fig. 9.

In den Figuren sind gleiche oder funktionsgleiche Elemente mit denselben Bezugszeichen versehen worden, sofern nichts anderes angegeben ist.

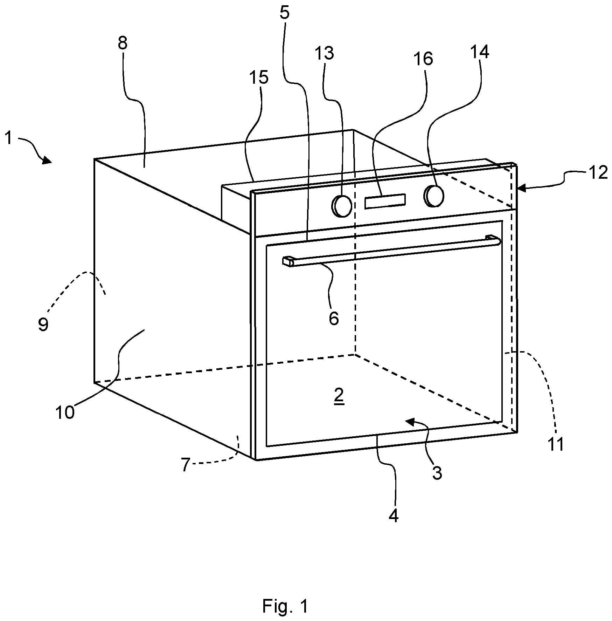

Die Fig. 1 zeigt eine schematische perspektivische Ansicht einer Ausführungsform eines Haushaltsgeräts 1. Das Haushaltsgerät 1 kann ein Backofen, ein Mikrowellen-Kombinationsbackofen, ein Doppelbackofen, ein Mikrowellenherd, ein Kühlschrank, ein Kaffee-Vollautomat, eine Wärmeschublade, eine Geschirrspülmaschine, eine Waschmaschine, ein Trockner oder dergleichen sein. Nachfolgend wird jedoch davon ausgegangen, dass das Haushaltsgerät 1 ein Haushaltsgargerät, wie beispielsweise ein Backofen, ist.

Das Haushaltsgerät 1 weist einen Garraum 2 auf, der mit Hilfe einer Tür 3 verschließbar ist. Der Garraum 2 kann auch als Muffel oder Backofenmuffel bezeichnet werden. Der Garraum 2 kann im Inneren eines Gehäuses des Haushaltsgeräts 1 angeordnet sein. Die Tür 3 ist in der Fig. 1 in einer geschlossenen Stellung dargestellt. Durch ein Schwenken um eine an einem unteren Ende der Tür 3 oder einer Unterkante 4 der Tür 3 vorgesehene Schwenkachse kann die Tür 3 geschlossen oder geöffnet werden. Alternativ kann die Tür 3 seitlich an dem Garraum 2 angeschlagen sein. Ferner kann die Tür 3 an einem aus dem Garraum 2 herausziehbaren Backwagen angeordnet sein.

An einem oberen Abschnitt oder an einer Oberkante 5 der Tür 3 kann ein Griff 6 vorgesehen sein. Der Garraum 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Garraum 2 ist vorzugsweise quader- oder würfelförmig. Der Garraum 2 kann aus einem Metallwerkstoff, insbesondere aus einem Stahlblech, gefertigt sein.

Das Haushaltsgerät 1 umfasst weiterhin an einer Schalterblende oder Bedienblende 12 vorgesehene Bedienknäufe 13, 14. Die Bedienknäufe 13, 14 können beispielsweise drehbar sein. Rückseitig an der Bedienblende 12 kann eine nur schematisch gezeigte Steuereinrichtung 15 zum Steuern des Haushaltsgeräts 1 vorgesehen sein. Die Steuereinrichtung 15 kann eine Regel- und/oder Steuereinrichtung sein. An der Bedienblende 12 kann weiterhin ein Anzeige-Display 16 vorgesehen sein. Mit Hilfe des Anzeige-Displays 16 kann ein Betriebszustand des Haushaltsgeräts 1 angezeigt werden. Beispielsweise kann mit Hilfe des Anzeige-Displays 16 eine mit Hilfe eines der Bedienknäufe 13, 14 eingestellte Temperatur angezeigt werden.

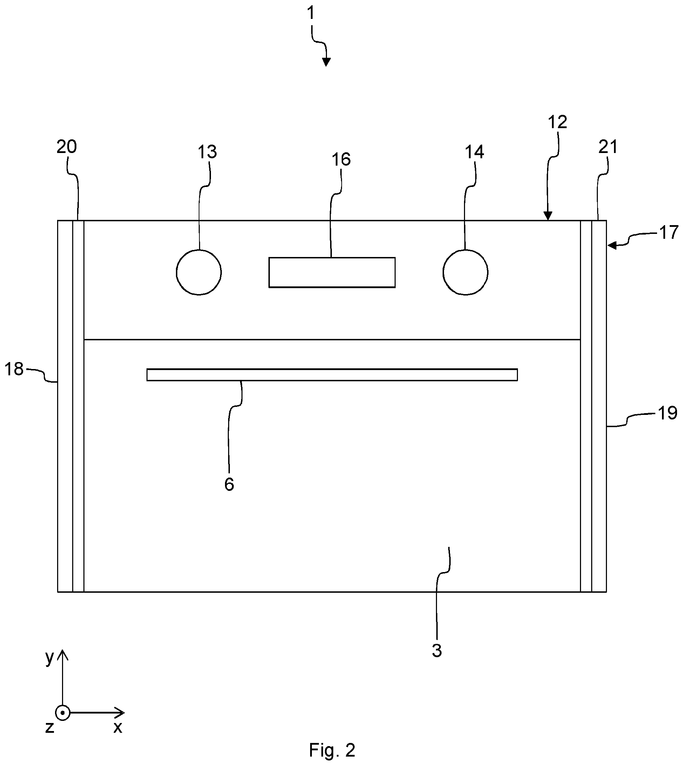

Wie die Fig. 2 zeigt, kann das Haushaltsgerät 1 in einem Möbel 17 eingebaut sein, von dem jedoch nur zwei einander gegenüberliegende Seitenwände 18, 19 gezeigt sind. Zum Verdecken eines jeweiligen Zwischenraums zwischen dem Haushaltsgerät 1 und den Seitenwänden 18, 19 des Möbels 17 umfasst das Haushaltsgerät 1 Sichtblenden 20, 21. Die Sichtblenden 20, 21 verdecken die Zwischenräume zwischen den Seitenwänden 18, 19 des Möbels 17 und dem Haushaltsgerät 1. Die Sichtblenden 20, 21 können auch als Dekorblenden, Designblenden, Sichtlisenen, Designlisenen oder Dekorlisenen bezeichnet werden. Um ein optisch ansprechendes Design des in dem Möbel 17 eingebauten Haushaltsgeräts 1 zu erreichen, ist es erforderlich, dass zwischen der Seitenwand 18 und der Sichtblende 20 sowie zwischen der Sichtblende 20 und der Bedienblende 12 sowie der Tür 3 jeweils ein sich über die gesamte Länge der Sichtblende 20 erstreckender gleichmäßiger Spalt vorgesehen ist. Entsprechendes gilt für die Sichtblende 21.

Dem Haushaltsgerät 1 ist ein Koordinatensystem mit einer x-Richtung oder Breitenrichtung x, einer y-Richtung oder Hochrichtung y sowie einer z-Richtung oder Tiefenrichtung z zugeordnet. Die Richtungen x, y, z sind senkrecht zueinander positioniert. Die Sichtblenden 20, 21 verlaufen als langgestreckte Bauteile entlang der Hochrichtung y. Um die zuvor erwähnten Spalte einstellen zu können, ist es vorteilhaft, die Sichtblenden 20, 21 entlang der Breitenrichtung x linear verstellen zu können.

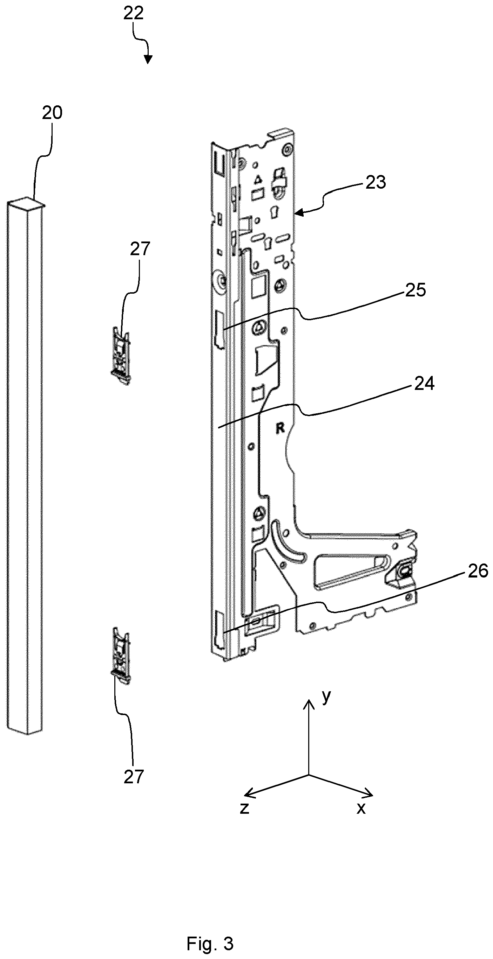

Die Fig. 3 zeigt eine schematische perspektivische Explosionsansicht einer Montageanordnung 22 für das Haushaltsgerät 1.Vorzugsweise sind zwei derartige Montageanordnungen 22 vorgesehen, die beidseits des Haushaltsgeräts 1 angeordnet sind. Die in der Fig. 3 gezeigte Montageanordnung 22 ist beispielsweise der Seitenwand 10 zugeordnet und mit dieser verschraubt. Nachfolgend wird nur auf eine Montageanordnung 22 eingegangen.

Die Montageanordnung 22 umfasst neben der Sichtblende 20 eine Montageleiste 23. Die Montageleiste 23 kann auch als technische Lisene bezeichnet werden beziehungsweise ist eine technische Lisene. Die Montageleiste 23 kann ein Blechbiegebauteil sein. Die Montageleiste 23 umfasst eine ebene Montagefläche 24, an der die Sichtblende 20 montierbar ist. An der Montagefläche 24 sind zwei Montagedurchbrüche 25, 26 vorgesehen. Die Montagedurchbrüche 25, 26 sind vorzugsweise identisch ausgebildet. Entlang der Hochrichtung y betrachtet sind die Montagedurchbrüche 25, 26 voneinander beabstandet angeordnet.

Jedem Montagedurchbruch 25, 26 ist eine Befestigungsvorrichtung 27 zugeordnet. Die Befestigungsvorrichtungen 27 sind baugleich. Mit Hilfe der Befestigungsvorrichtungen 27 ist die Sichtblende 20 mit der Montageleiste 23 verbunden. Dabei ermöglichen die Befestigungsvorrichtung 27 eine Verstellbarkeit der Sichtblende 20 entlang der Breitenrichtung x, um die Spalte zwischen der Seitenwand 18 des Möbels 17 und der Sichtblende 20 beziehungsweise zwischen der Sichtblende 20 und der Bedienblende 12 sowie der Tür 3 einzustellen. Die Befestigungsvorrichtungen 27 sind zwischen der Montagefläche 24 und der Sichtblende 20 platziert. Analoges gilt für die Sichtblende 21. Nachfolgend wird auf nur eine Befestigungsvorrichtung 27 Bezug genommen.

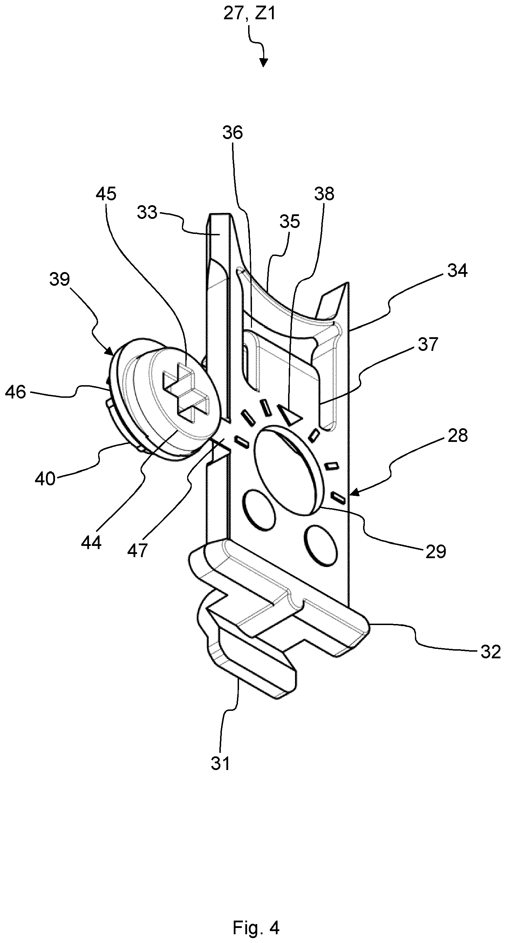

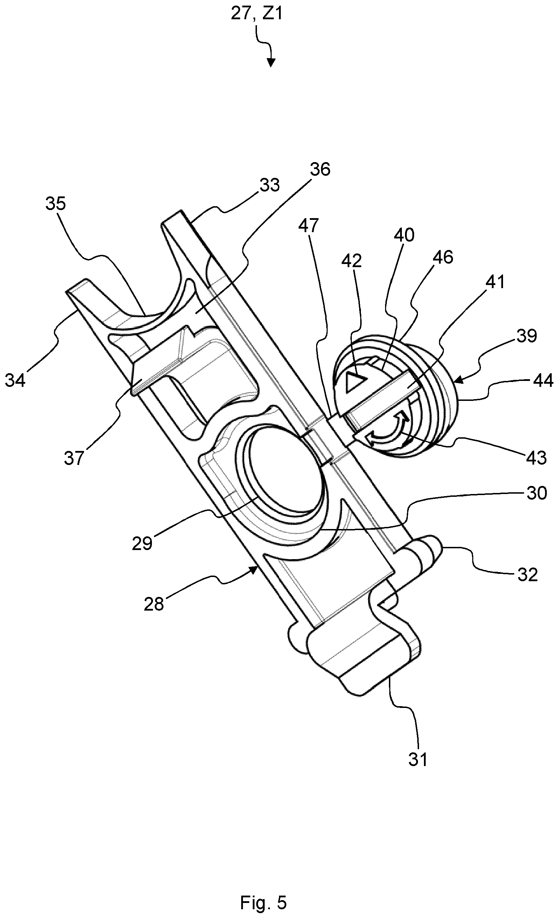

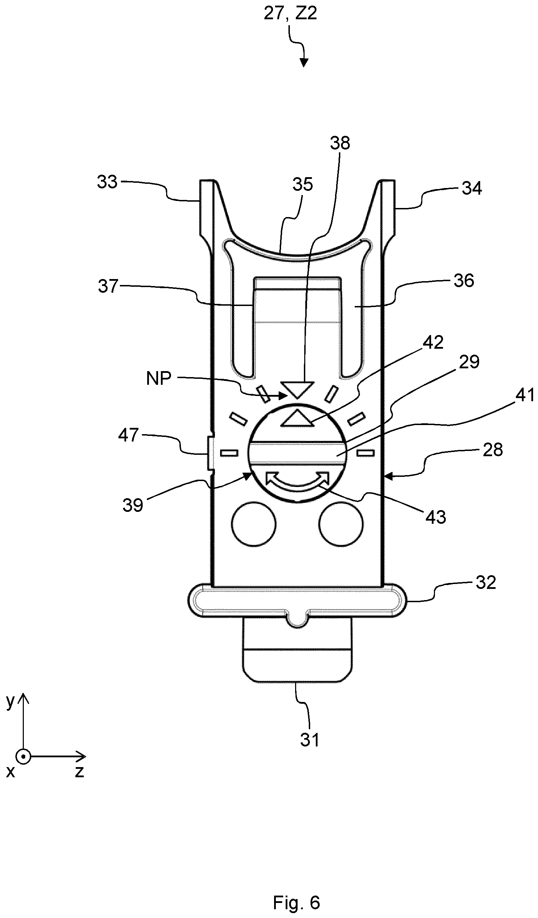

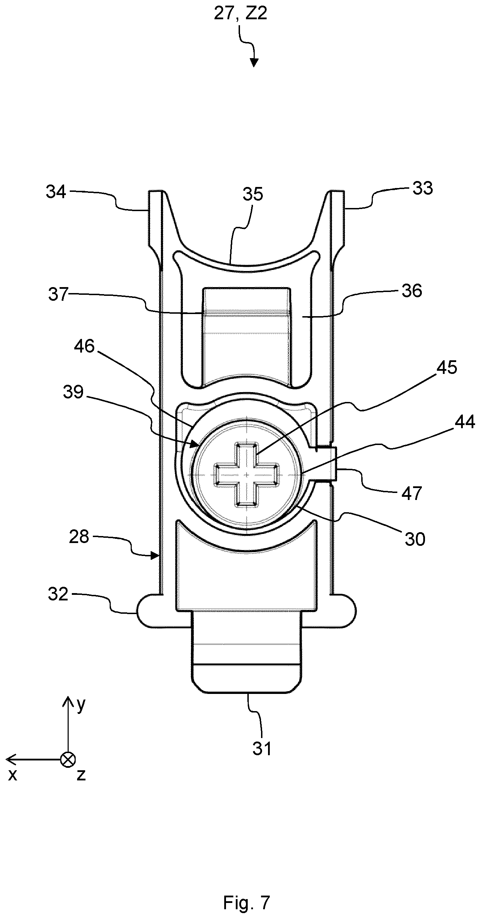

Die Fig. 4 zeigt eine schematische perspektivische Ansicht einer Ausführungsform einer Befestigungsvorrichtung 27. Die Fig. 5 zeigt eine weitere schematische perspektivische Ansicht der Befestigungsvorrichtung 27. Die Fig. 6 zeigt eine schematische Vorderansicht der Befestigungsvorrichtung. Die Fig. 7 zeigt eine schematische Rückansicht der Befestigungsvorrichtung 27. Nachfolgend wird auf die Fig. 4 bis 7 gleichzeitig Bezug genommen.

Die Befestigungsvorrichtung 27 ist ein einteiliges, insbesondere ein materialeinstückiges, Kunststoffbauteil. "Einteilig" oder "einstückig" bedeutet vorliegend, dass die Befestigungsvorrichtung 27 nicht aus mehreren Bauteilen zusammengesetzt ist, sondern dass die Befestigungsvorrichtung ein einziges Bauteil bildet. "Materialeinstückig" bedeutet vorliegend, dass die Befestigungsvorrichtung 27 durchgehend aus demselben Material gefertigt ist. Beispielsweise kann die Befestigungsvorrichtung 27 aus Polyethylen (PE), AcrylnitrilButadien-Styrol (ABS), Polypropylen (PP) oder aus jedem anderen geeigneten Kunststoffmaterial gefertigt sein.

Die Befestigungsvorrichtung 27 umfasst einen Basiskörper 28. Der Basiskörper 28 ist im Wesentlichen rechteckförmig oder plattenförmig. Der Basiskörper 28 weist einen Aufnahmeabschnitt 29 in Form einer den Basiskörper 28 durchbrechenden Bohrung auf. Der Aufnahmeabschnitt 29 kann kreisrund sein. In der Orientierung der Fig. 5 und 7 rückseitig an dem Basiskörper 28 ist ein weitere Aufnahmeabschnitt 30 vorgesehen. Der Aufnahmeabschnitt 30 durchbricht den Basiskörper 28 jedoch nicht vollständig, sondern ist als eine an dem Basiskörper 28 vorgesehene Tasche ausgebildet.

An dem Basiskörper 28 ist ein hakenförmiger Einhängeabschnitt 31 vorgesehen, der ein Einhängen der Befestigungsvorrichtung 27 in den jeweiligen Montagedurchbruch 25, 26 ermöglicht. Der Einhängeabschnitt 31 erstreckt sich in der Orientierung der Fig. 4 bis 7 unterseitig aus dem Basiskörper 28 heraus und von diesem weg. Der Einhängeabschnitt 31 ist federelastisch verformbar. An den Einhängeabschnitt 31 schließt sich ein leistenförmiger Höhenpositionsabschnitt 32 an. Der Höhenpositionsabschnitt 32 erstreckt sich beidseits seitlich aus dem Basiskörper 28 heraus und ist geeignet, in entsprechende an der Sichtblende 20 vorgesehene Ausnehmungen formschlüssig einzugreifen. Eine formschlüssige Verbindung entsteht durch das Ineinander- oder Hintergreifen von mindestens zwei Verbindungspartnern, vorliegend dem Höhenpositionsabschnitt 32 und den Ausnehmungen der Sichtblende 20.

An einem dem Einhängeabschnitt 31 und dem Höhenpositionsabschnitt 32 abgewandten Endabschnitt des Basiskörpers 28 sind zwei federelastisch verformbare Schnapparme 33, 34 vorgesehen, die dazu eingerichtet sind, formschlüssig in die Sichtblende 20 einzuschnappen oder einzurasten. Die Schnapparme 33, 34 sind mit Hilfe eines federelastisch verformbaren Federabschnitts 35 einteilig, insbesondere materialeinstückig, verbunden. Der Federabschnitt 35 ist bogenförmig gekrümmt. Die Schnapparme 33, 34 und der Federabschnitt 35 umschließen so eine den Basiskörper 28 durchbrechende Ausnehmung 36.

In die Ausnehmung 36 hinein und aus dem Basiskörper 28 heraus erstreckt sich ein federelastisch verformbarer Rastabschnitt 37. Der Rastabschnitt 37 ist vorzugsweise als Rasthaken oder Schnapphaken ausgebildet. Der Rastabschnitt 37 ist geeignet, in den entsprechenden Montagedurchbruch 25, 26 formschlüssig einzugreifen. Um den Aufnahmeabschnitt 29 herum verteilt sind Anzeigesymbole 38, von denen in den Fig. 4 und 6 jeweils nur eines mit einem Bezugszeichen versehen ist. Die Anzeigesymbole 38 können pfeilförmig, dreieckförmig oder leistenförmig ausgebildet sein.

Neben dem Basiskörper 28 umfasst die Befestigungsvorrichtung einen Exzenterkörper 39. Der Exzenterkörper 39 umfasst wiederum einen Eingriffsabschnitt 40, der zylinderförmig ist. Der Eingriffsabschnitt 40 kann in den Aufnahmeabschnitt 29 eingedrückt werden, so dass der Exzenterkörper 39 in den Aufnahmeabschnitt 29 verrastet. Das heißt, der Eingriffsabschnitt 40 greift formschlüssig in den Aufnahmeabschnitt 29 ein. Der Eingriffsabschnitt 40 umfasst eine Werkzeugausnehmung 41, in welcher ein Werkzeug zum Drehen des Exzenterkörpers 39 aufnehmbar ist. Die Werkzeugausnehmung 41 kann geeignet sein, eine Klinge eines Schlitzschraubenziehers aufzunehmen. Ferner umfasst der Eingriffsabschnitt 40 ein Anzeigesymbol 42 sowie ein Anzeigesymbol 43, welches eine mögliche Drehrichtung des Exzenterkörpers 39 anzeigt. Das Anzeigesymbol 42 kann pfeilförmig oder dreieckförmig sein.

Neben dem Eingriffsabschnitt 40 umfasst der Exzenterkörper 39 einen zylinderförmigen Exzenterabschnitt 44. Der Exzenterabschnitt 44 ist bezüglich des Eingriffsabschnitts 40 außermittig angeordnet. Das heißt, der Eingriffsabschnitt 40 und der Exzenterabschnitt 44 weisen keine gemeinsame Mittel- oder Symmetrieachse auf, sondern eine Symmetrieachse des Eingriffsabschnitts 40 und eine Symmetrieachse des Exzenterabschnitts 44 sind voneinander beabstandet oder zueinander versetzt platziert. Der Exzenterabschnitt 44 umfasst ebenfalls eine Werkzeugausnehmung 45, in welcher ein Werkzeug zum Drehen des Exzenterkörpers 39 aufnehmbar ist. Insbesondere ist die Werkzeugausnehmung 45 geeignet, eine Klinge eines Kreuzschlitzschraubendrehers in sich aufzunehmen.

Zwischen dem Eingriffsabschnitt 40 und dem Exzenterabschnitt 44 ist ein scheibenförmiger Zwischenabschnitt 46 vorgesehen. Der Zwischenabschnitt 46 ist zylinderförmig. Der Zwischenabschnitt 46 und der Eingriffsabschnitt 40 weisen eine gemeinsame Symmetrieachse auf. Dabei ist ein Durchmesser des Zwischenabschnitts 46 größer als ein Durchmesser des Eingriffsabschnitts 40 beziehungsweise größer als ein Durchmesser des Aufnahmeabschnitts 29. Der Durchmesser des Zwischenabschnitts 46 ist geringfügig kleiner als ein Durchmesser des Aufnahmeabschnitts 30, so dass der Zwischenabschnitt 46 in dem Aufnahmeabschnitt 30 aufnehmbar ist.

Der Exzenterkörper 39 und der Basiskörper 28 sind mit Hilfe eines Scharnierabschnitts 47 einteilig, insbesondere materialeinstückig, miteinander verbunden. Der Scharnierabschnitt 47 ist insbesondere ein Filmscharnier. Unter einem "Filmscharnier" ist vorliegend eine Materialeinengung oder Materialverengung zu verstehen, welche elastisch verformbar ist. Der Exzenterkörper 39 kann somit mit Hilfe des Scharnierabschnitts 47 gegenüber dem Basiskörper 28 verschwenkt werden.

Die Funktionsweise der Befestigungsvorrichtung 27 wird nachfolgend erläutert. Zunächst wird der Exzenterkörper 39 mit Hilfe des Scharnierabschnitts 47 derart gegenüber dem Basiskörper 28 verschwenkt, dass der Exzenterkörper 39, insbesondere der Eingriffsabschnitt 40 des Exzenterkörpers 39, in dem Aufnahmeabschnitt 29 des Basiskörpers 28 aufgenommen wird. Hierzu wird der Exzenterkörper 39 in den Aufnahmeabschnitt 29 eingedrückt, wo dieser verrastet. Hierbei wird auch der Zwischenabschnitt 46 in dem rückseitig an dem Basiskörper 28 vorgesehenen Aufnahmeabschnitt 30 aufgenommen.

Der Exzenterkörper 39 wird also mit Hilfe des Scharnierabschnitts 47 von einem in den Fig. 4 und 5 gezeigten Ausgangszustand Z1, in welchem der Exzenterkörper 39 außerhalb des Aufnahmeabschnitts 29 angeordnet ist, in einen in den Fig. 6 und 7 gezeigten Endzustand Z2 verbracht, in welchem der Exzenterköper 39, insbesondere der Eingriffsabschnitt 40 des Exzenterkörpers 39, in dem Aufnahmeabschnitt 29 aufgenommen und insbesondere in diesem verrastet ist.

Wie die Fig. 6 zeigt, befindet sich der Exzenterkörper 39 in dem Endzustand Z2 zunächst in einer Nullposition NP, in welcher das Anzeigesymbol 38 auf das Anzeigesymbol 42 zeigt. In der Nullposition NP ist der Exzenterabschnitt 44, wie in der Fig. 7 gezeigt, bezüglich der Breitenrichtung x mittig an dem Basiskörper 28 angeordnet. Anschließend wird mit Hilfe des Einhängeabschnitts 31 in jedem Montagedurchbruch 25, 26 der Montageleiste 23 eine Befestigungsvorrichtung 27 eingehängt. Mit Hilfe eines Eindrückens der jeweiligen Befestigungsvorrichtung 27 in den jeweiligen Montagedurchbruch 25, 26 verformt sich der Rastabschnitt 37 federelastisch und schnappt in den jeweiligen Montagedurchbruch 25, 26 ein. Die Befestigungsvorrichtungen 27 sind nun formschlüssig mit der Montageleiste 23 verbunden.

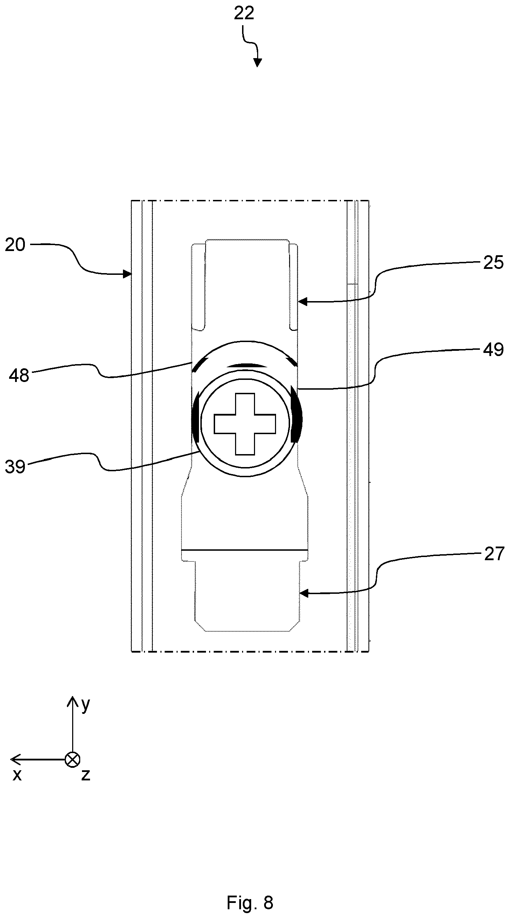

Anschließend kann der Exzenterkörper 39 mit Hilfe eines in die Werkzeugausnehmung 41 eingesteckten Werkzeugs aus der Nullposition NP entweder im Uhrzeigersinn oder entgegen dem Uhrzeigersinn verdreht werden. Hierbei liegt, wie in der Fig. 8 gezeigt, der Exzenterkörper 39 an Seitenkonturen 48, 49 des jeweiligen Montagedurchbruchs 25, 26 an. Bei einem Verdrehen des Exzenterkörpers 39 bewegt sich der Exzenterabschnitt 44 in der Breitenrichtung x entweder nach links oder nach rechts, so dass sich auch die Befestigungsvorrichtung 27 selbst gegenüber der Montageleiste 23 linear entlang der Breitenrichtung x bewegt. Hierzu ist zwischen den Seitenkonturen 48, 49 des jeweiligen Montagedurchbruchs 25, 26 und des in diesem aufgenommenen Einhängeabschnitts 31 sowie des Rastabschnitts 37 ausreichend Spiel vorgesehen, welches eine Bewegung der Befestigungsvorrichtung 27 gegenüber der Montageleiste 23 entlang der Breitenrichtung x ermöglicht. Mit Hilfe einer unterschiedlichen Verstellung der beiden Befestigungsvorrichtungen 27 kann die Sichtblende 20 verkippt werden.

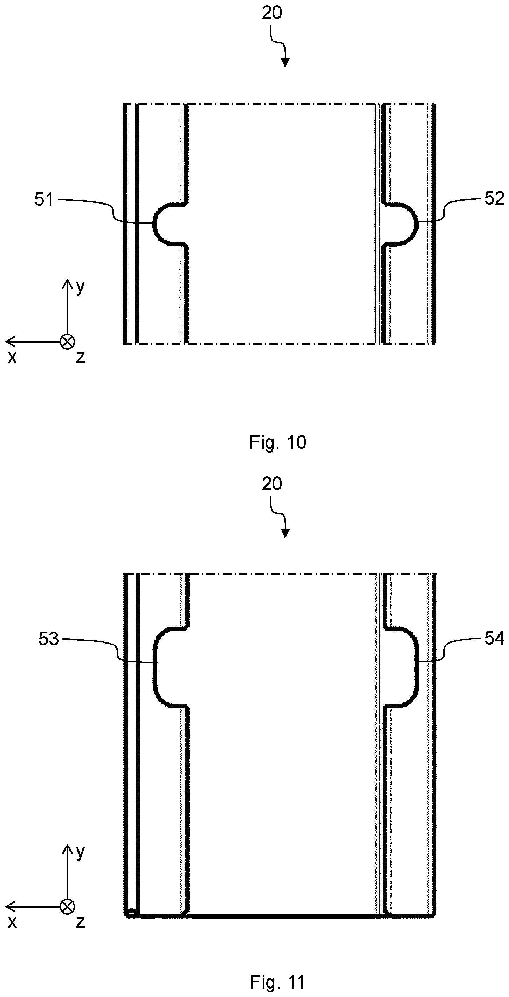

Nach dem Einstellen der Befestigungsvorrichtungen 27 kann die Sichtblende 20 auf die Befestigungsvorrichtungen 27 aufgeclipst werden. Hierbei sind, wie in den Fig. 10 und 11 gezeigt, rückseitig an der Sichtblende Ausnehmungen 50 bis 53 vorgesehen. In den Ausnehmungen 50 bis 53 sind die Höhenpositionsabschnitte 32 der Befestigungsvorrichtungen 27 aufnehmbar. Dabei wirken in der Fig. 10 gezeigte obere Ausnehmungen 50, 51 als Festlager für die Sichtblende 20, und in der Fig. 11 gezeigte langgestreckte untere Ausnehmungen 52, 53 wirken als Loslager für die Sichtblende 20.

Alternativ kann die Sichtblende 20 auch vor dem Verstellen der Befestigungsvorrichtungen 27 an diesen montiert werden. In diesem Fall ist ein Verstellen der Befestigungsvorrichtungen 27 mit Hilfe eines in die Werkzeugausnehmung 45 eingesteckten Werkzeugs in der Orientierung der Fig. 3 von hinten möglich.

Die Befestigungsvorrichtungen 27 sind verdeckt und nicht sichtbar, wodurch ein optisch ansprechendes Design ermöglicht wird. Die Einstellbarkeit der Befestigungsvorrichtung 27 ist stufenlos möglich. Der Verstellbereich wird über die Anzeigesymbole 38, 42 angezeigt. Einmal eingestellt, bleibt die Winkelposition des Exzenterkörpers 39, und damit auch die Position der Sichtblende 20, gleich. Dadurch, dass zwei Befestigungsvorrichtungen 27 für jede Sichtblende 20, 21 vorgesehen sind, wird eine genaue Einstellung ermöglicht. Dadurch, dass die Befestigungsvorrichtungen 27 einteilige Bauteile sind, sind diese besonders kostengünstig, beispielsweise als Kunststoffspritzgussbauteil, herstellbar. Ferner ist der Exzenterkörper 39 mit Hilfe des Scharnierabschnitts 47 verliersicher mit dem Basiskörper 28 verbunden.

### Verwendete Bezugszeichen.

- 1: Haushaltsgerät
- 2: Garraum
- 3: Tür
- 4: Unterkante
- 5: Oberkante
- 6: Griff
- 7: Boden
- 8: Decke
- 9: Rückwand
- 10: Seitenwand
- 11: Seitenwand
- 12: Bedienblende
- 13: Bedienknauf
- 14: Bedienknauf
- 15: Steuereinrichtung
- 16: Anzeige-Display
- 17: Möbel
- 18: Seitenwand
- 19: Seitenwand
- 20: Sichtblende
- 21: Sichtblende
- 22: Montageanordnung
- 23: Montageleiste
- 24: Montagefläche
- 25: Montagedurchbruch
- 26: Montagedurchbruch
- 27: Befestigungsvorrichtung
- 28: Basiskörper
- 29: Aufnahmeabschnitt
- 30: Aufnahmeabschnitt
- 31: Einhängeabschnitt
- 32: Höhenpositionsabschnitt
- 33: Schnapparm
- 34: Schnapparm
- 35: Federabschnitt
- 36: Ausnehmung
- 37: Rastabschnitt
- 38: Anzeigesymbol
- 39: Exzenterkörper
- 40: Eingriffsabschnitt
- 41: Werkzeugausnehmung
- 42: Anzeigesymbol
- 43: Anzeigesymbol
- 44: Exzenterabschnitt
- 45: Werkzeugausnehmung
- 46: Zwischenabschnitt
- 47: Scharnierabschnitt
- 48: Seitenkontur
- 49: Seitenkontur
- 50: Ausnehmung
- 51: Ausnehmung
- 52: Ausnehmung
- 53: Ausnehmung

- NP: Nullposition
- x: Breitenrichtung
- y: Hochrichtung
- z: Tiefenrichtung
- Z1: Ausgangszustand
- Z2: Endzustand

## Patentansprüche

1. Befestigungsvorrichtung (27) zum Befestigen einer Sichtblende (20, 21) an einer Montageleiste (23) eines Haushaltsgeräts (1), mit einem Basiskörper (28), einem Exzenterkörper (39), welcher in einem Aufnahmeabschnitt (29) des Basiskörpers (28) aufnehmbar ist, **dadurch gekennzeichnet, dass** ein Scharnierabschnitt (47), welcher den Exzenterkörper (39) mit dem Basiskörper (28) verbindet, wobei der Exzenterkörper (39) mit Hilfe des Scharnierabschnitts (47) von einem Ausgangszustand (Z1), in welchem der Exzenterkörper (39) außerhalb des Aufnahmeabschnitts (29) angeordnet ist, in einen Endzustand (Z2), in welchem der Exzenterkörper (39) in dem Aufnahmeabschnitt (29) aufgenommen ist, klappbar ist.

2. Befestigungsvorrichtung nach Anspruch 1, **dadurch gekennzeichnet, dass** die Befestigungsvorrichtung (27) ein einteiliges, insbesondere ein materialeinstückiges, Kunststoffbauteil ist.

3. Befestigungsvorrichtung nach Anspruch 1 oder 2, **dadurch gekennzeichnet, dass** der Basiskörper (28) federelastisch verformbare Schnapparme (33, 34) aufweist, die dazu eingerichtet sind, formschlüssig in die Sichtblende (20, 21) einzuschnappen.

4. Befestigungsvorrichtung nach Anspruch 3, **dadurch gekennzeichnet, dass** die Schnapparme (33, 34) mit Hilfe eines federelastisch verformbaren Federabschnitts (35) miteinander verbunden sind.

5. Befestigungsvorrichtung nach einem der Ansprüche 1 - 4, **dadurch gekennzeichnet, dass** der Basiskörper (28) einen Höhenpositionsabschnitt (32) zum Positionieren der Befestigungsvorrichtung (27) an der Sichtblende (20, 21) aufweist, wobei der Höhenpositionsabschnitt (32) dazu eingerichtet ist, formschlüssig in an der Sichtblende (20, 21) vorgesehene Ausnehmungen (50 - 53) einzugreifen.

6. Befestigungsvorrichtung nach einem der Ansprüche 1 - 5, **dadurch gekennzeichnet, dass** der Exzenterkörper (39) einen Eingriffsabschnitt (40) aufweist, der dazu eingerichtet ist, formschlüssig in den Aufnahmeabschnitt (29) einzugreifen.

7. Befestigungsvorrichtung nach Anspruch 6, **dadurch gekennzeichnet, dass** der Eingriffsabschnitt (40) eine Werkzeugausnehmung (41) aufweist, in welcher ein Werkzeug zum Drehen des Exzenterkörpers (39) aufnehmbar ist.

8. Befestigungsvorrichtung nach Anspruch 6 oder 7, **dadurch gekennzeichnet, dass** der Exzenterkörper (39) einen zylinderförmigen Exzenterabschnitt (44) aufweist, welcher außermittig mit dem Eingriffsabschnitt (40) verbunden ist.

9. Befestigungsvorrichtung nach Anspruch 8, **dadurch gekennzeichnet, dass** der Exzenterabschnitt (44) eine Werkzeugausnehmung (45) aufweist, in welcher ein Werkzeug zum Drehen des Exzenterkörpers (39) aufnehmbar ist.

10. Montageanordnung (22) für ein Haushaltsgerät (1), mit einer Montageleiste (23) und einer Befestigungsvorrichtung (27) nach einem der Ansprüche 1 - 9, wobei die Befestigungsvorrichtung (27) in den Endzustand (Z2) verbracht ist, wobei die Befestigungsvorrichtung (27) an der Montageleiste (23) befestigt ist, und wobei sich die Befestigungsvorrichtung (27) bei einem Verdrehen des Exzenterkörpers (39) relativ zu dem Basiskörper (28) linear gegenüber der Montageleiste (23) bewegt.

11. Montageanordnung nach Anspruch 10, **gekennzeichnet durch** eine Sichtblende (20, 21), welche mit Hilfe der Befestigungsvorrichtung (27) mit der Montageleiste (23) verbunden ist.

12. Montageanordnung nach Anspruch 10 oder 11, **dadurch gekennzeichnet, dass** der Basiskörper (28) einen Einhängeabschnitt (31) zum Einhängen der Befestigungsvorrichtung (27) in einen an der Montageleiste (23) vorgesehenen Montagedurchbruch (25, 26) aufweist.

13. Montageanordnung nach Anspruch 12, **dadurch gekennzeichnet, dass** der Basiskörper (28) einen Rastabschnitt (37) zum Einrasten der Befestigungsvorrichtung (27) in den Montagedurchbruch (25, 26) aufweist.

14. Haushaltsgerät (1) mit einer Befestigungsvorrichtung (27) nach einem der Ansprüche 1 - 9 oder einer Montageanordnung (22) nach einem der Ansprüche 10 - 13.

## Claims

1. Fastening apparatus (27) for fastening a screen (20, 21) to an assembly rail (23) of a household appliance (1), with a base body (28), an eccentric body (39), which can be received in a receiving section (29) of the base body (28), **characterised in that** a hinge section (47), which connects the eccentric body (39) to the base body (28), wherein the eccentric body (39) can be folded with the aid of the hinge section (47) from a starting state (Z1), in which the eccentric body (39) is arranged outside of the receiving section (29), into an end state (Z2), in which the eccentric body (39) is received in the receiving section (29).

2. Fastening apparatus according to claim 1, **characterised in that** the fastening apparatus (27) is a one-piece, in particular an integral plastic component.

3. Fastening apparatus according to claim 1 or 2, **characterised in that** the base body (28) has spring-elastic deformable snap-fit arms (33, 34), which are designed to snap into the screen (20, 21) in a form-fitting manner.

4. Fastening apparatus according to claim 3, **characterised in that** the snap-fit arms (33, 34) are connected to one another with the aid of a spring-elastic deformable spring section (35).

5. Fastening apparatus according to one of claims 1 - 4, **characterised in that** the base body (28) has a height position section (32) for positioning the fastening apparatus (27) on the screen (20, 21), wherein the height position section (32) is designed to engage in recesses (50-53) provided on the screen (20, 21) in a form-fitting manner.

6. Fastening apparatus according to one of claims 1 - 5, **characterised in that** the eccentric body (39) has an engagement section (40), which is designed to engage in the receiving section (29) in a form-fitting manner.

7. Fastening apparatus according to claim 6, **characterised in that** the engagement section (40) has a tool recess (41), in which a tool can be received for rotating the eccentric body (39).

8. Fastening apparatus according to claim 6 or 7, **characterised in that** the eccentric body (39) has a cylindrical eccentric section (44), which is connected eccentrically with the engagement section (40).

9. Fastening apparatus according to claim 8, **characterised in** the eccentric section (44) has a tool recess (45), in which a tool can be received for rotating the eccentric body (39).

10. Assembly arrangement (22) for a household appliance (1), with an assembly rail (23) and a fastening apparatus (27) according to one of claims 1-9, wherein the fastening apparatus (27) is brought into the end state (Z2), wherein the fastening apparatus (27) is fastened to the assembly rail (23), and wherein the fastening apparatus (27) moves linearly relative to the base body (28) in respect of the assembly rail (23) when the eccentric body twists (39).

11. Assembly arrangement according to claim 10, **characterised by** a screen (20, 21), which is connected to the assembly rail (23) with the aid of the fastening apparatus (27).

12. Assembly arrangement according to claim 10 or 11, **characterised in that** the base body (28) has a suspension section (31) for suspending the fastening apparatus (27) in an assembly aperture (25, 26) provided on the assembly rail (23).

13. Assembly arrangement according to claim 12, **characterised in that** the base body (28) has a latching section (37) for engaging the fastening apparatus (27) into the assembly aperture (25, 26).

14. Household appliance (1) with a fastening apparatus (27) according to one of claims 1 - 9, or an assembly arrangement (22) according to one of claims 10-13.

## Revendications

1. Dispositif de fixation (27) pour fixer un panneau de garniture (20, 21) à une barrette d'assemblage (23) d'un appareil électroménager (1), comprenant un corps principal (28), un corps excentrique (39) qui peut être logé dans une section de réception (29) du corps principal (28),
**caractérisé en ce qu'**une partie charnière (47) relie le corps excentrique (39) au corps principal (28), dans lequel le corps excentrique (39) peut pivoter à l'aide de la partie charnière (47) à partir d'un état initial (Z1), dans lequel le corps excentrique (39) est situé à l'extérieur de la section de réception (29), dans un état final (Z2), dans lequel le corps excentrique (39) est logé dans la section de réception (29).

2. Dispositif de fixation selon la revendication 1, **caractérisé en ce que** le dispositif de fixation (27) est une pièce en matière plastique d'un seul tenant, en particulier d'un seul tenant et du même matériau.

3. Dispositif de fixation selon la revendication 1 ou 2 **caractérisé en ce que** le corps principal (28) comprend des bras d'encliquetage (33, 34) élastiquement déformables qui sont configurés pour s'encliqueter par coopération de forme dans le panneau de garniture (20, 21).

4. Dispositif de fixation selon la revendication 3, **caractérisé en ce que** les bras d'encliquetage (33, 34) sont reliés entre eux à l'aide d'une section à ressort (35) élastiquement déformable.

5. Dispositif de fixation selon l'une des revendications 1 à 4, **caractérisé en ce que** le corps principal (28) comprend une section de position en hauteur (32) pour positionner le dispositif de fixation (27) sur le panneau de garniture (20, 21), dans lequel la section de position en hauteur (32) est configurée pour s'engager par coopération de forme dans des creux (50, 53) ménagés sur le panneau de garniture (20, 21).

6. Dispositif de fixation selon l'une des revendications 1 à 5, **caractérisé en ce que** le corps excentrique (39) comprend une section de mise en prise (40) qui est configurée pour s'engager par coopération de forme dans la section de réception (29).

7. Dispositif de fixation selon la revendication 6, **caractérisé en ce que** la section de mise en prise (40) comprend un creux pour outil (41), dans lequel un outil peut être reçu pour tourner le corps excentrique (39).

8. Dispositif de fixation selon la revendication 6 ou 7, **caractérisé en ce que** le corps excentrique (39) comprend une section excentrique cylindrique (44), qui est reliée de façon excentrée à la section de mise en prise (40).

9. Dispositif de fixation selon la revendication 8, **caractérisé en ce que** la section excentrique (44) comprend un creux pour outil (45), dans lequel un outil peut être reçu pour tourner le corps excentrique (39).

10. Agencement d'assemblage (22) pour un appareil électroménager (1), comprenant une barrette d'assemblage (23) et un dispositif de fixation (27) selon l'une des revendications 1 à 9, dans lequel le dispositif de fixation (27) est transféré dans l'état final (Z2), dans lequel le dispositif de fixation (27) est fixé à la barre d'assemblage (23), et dans lequel le dispositif de fixation (27) se déplace lors d'une rotation du corps excentrique (39) par rapport au corps principal (28) linéairement vis-à-vis de la barre d'assemblage (23).

11. Agencement d'assemblage selon la revendication 10, **caractérisé en ce qu'**un panneau de garniture (20, 21) est assemblé à la barrette d'assemblage (23) à l'aide du dispositif de fixation (27).

12. Agencement d'assemblage selon la revendication 10 ou 11, **caractérisé en ce que** le corps principal (28) comprend une section d'accrochage (31) pour accrocher le dispositif de fixation (27) dans une percée d'assemblage (25, 26) agencée sur la barrette d'assemblage (23).

13. Agencement d'assemblage selon la revendication 12, **caractérisé en ce que** le corps principal (28) comprend une section d'encliquetage (37) pour encliqueter le dispositif de fixation (27) dans la percée d'assemblage (25, 26).

14. Appareil électroménager (1) comprenant un dispositif de fixation (27) selon l'une des revendications 1 à 9 ou un agencement d'assemblage (22) selon l'une des revendications 10 à 13.
